# FASCICULE DE BREVET EUROPEEN

(11) **EP 2 786 253 B1**
(45) Date de publication et mention de la délivrance du brevet: **14.10.2015**
(21) Numéro de dépôt: 12791783.9
(22) Date de dépôt: 29.11.2012
(51) Int. Cl.: G06F 11/16, G06F 21/55, G06F 21/79

(54) **PROCEDE DE DETECTION D'UNE ERREUR DE LECTURE D'UNE DONNEE**
FEHLERERKENNUNGSVERFAHREN BEIM LESEN EINES DATUMS
DATUM READING ERROR DETECTION METHOD

(30) Priorité: 01.12.2011 FR 1161029
(43) Date de publication de la demande: 08.10.2014
(73) Titulaire: Viaccess, 92057 Paris La Défense Cedex (FR)
(72) Inventeur: BARAU, Emmanuel, F-78000 Versailles (FR); SOQUET, Patrick, F-75005 Paris (FR)
(74) Mandataire: GIE Innovation Competence Group
(86) Numéro de dépôt international: PCT/EP2012/073963
(87) Numéro de publication internationale: WO 2013/079593

(56) Documents cités:
- US-A1- 2008 140 962
- US-A1- 2009 113 546

## Description

L'invention concerne un procédé de détection d'une erreur de lecture d'une donnée et un procédé de protection d'un processeur de sécurité. L'invention concerne également un support d'enregistrement d'informations ainsi qu'un processeur de sécurité pour la mise en oeuvre de ces procédés.

Des procédés connus détectent une erreur de lecture en réalisant les étapes suivantes :
a) l'enregistrement d'un premier exemplaire de la donnée dans une première zone d'une mémoire électronique et l'enregistrement d'un second exemplaire de la donnée dans une seconde zone d'une mémoire électronique,
   en réponse à une demande de lecture de la donnée :
b) la lecture des valeurs des premier et second exemplaires de la donnée dans, respectivement, les première et seconde zones,
c) la comparaison des valeurs lues des premier et second exemplaires de la donnée,
d) si les valeurs lues des premier et second exemplaires sont identiques, alors aucune erreur de lecture de cette donnée n'est détectée,

Une zone mémoire ou zone de mémoire est une mémoire électronique ou une portion d'une mémoire électronique divisée en plusieurs blocs mémoires. Chaque bloc mémoire est destiné à contenir une donnée. Typiquement, un bloc mémoire est une page ou un multiple entier d'une page. Une page est le plus petit nombre d'octets qui peut être écrit en une seule opération d'écriture. Ainsi, même si la donnée enregistrée dans une page a une taille plus petite que la page, la totalité de la page est considérée comme étant occupée par cette donnée et il n'est pas possible d'enregistrer dans cette page une donnée supplémentaire.

De l'état de la technique relatif à ces procédés connus est par exemple divulgué dans les demandes de brevet suivantes : GB 2 404 261, US 2006 053308, WO 2008 23297, US 2007 0033417, US 2005 0160310, US2008/140962A1 et US2009/113546A1.

Les procédés connus visent uniquement à se prémunir des conséquences d'une défaillance d'un bloc mémoire. Ainsi, si les valeurs des premier et second exemplaires sont différentes, alors une erreur est signalée et des mesures correctives sont déclenchées. Une des mesures correctives classiques consiste à corriger la valeur de la donnée enregistrée. Toutefois, ces procédés détectent aussi une erreur de lecture de la donnée. Dans le cas d'une erreur de lecture de données, l'absence d'égalité entre les valeurs des premier et second exemplaires de la donnée ne provient pas d'une corruption des données enregistrées dans les zones mémoires mais d'une erreur pendant le processus de lecture de ces données. Ici, on parle de corruption ou de données corrompues lorsque la valeur physiquement enregistrée de cette donnée est erronée à cause d'une défaillance d'un bloc mémoire. Ainsi, bien que les valeurs enregistrées des premier et second exemplaires soient parfaitement identiques, lors de l'étape c) ci-dessus, on constate que les valeurs sont différentes. Par exemple, une erreur de lecture peut être provoquée par une perturbation des signaux du bus de lecture ou par une corruption des données copiées dans une mémoire non volatile après avoir été lues dans une zone mémoire non volatile.

Les procédés connus ne font pas la distinction entre ces deux types d'erreur et lancent systématiquement, après la détection d'une erreur, la même mesure corrective. Typiquement, la mesure corrective consiste à corriger la valeur erronée. Or, dans le cas d'une erreur de lecture, une telle correction est inutile et se traduit par un gaspillage de ressources informatiques tels que du temps d'un microprocesseur mettant en oeuvre ce procédé.

Dans le domaine des processeurs de sécurité, il existe également une autre bonne raison pour distinguer ces deux types d'erreur. Un processeur de sécurité est un processeur électronique qui est renforcé pour être le plus résistant possible vis-à-vis des attaques de pirates informatiques. Il est donc généralement utilisé pour stocker des données confidentielles. Or, une attaque classique contre un processeur de sécurité consiste à corrompre les données enregistrées pour provoquer un comportement non prévu du processeur de sécurité qui peut révéler tout ou partie des données confidentielles qu'il contient. Toutefois, il est plus simple pour les pirates informatiques de provoquer une erreur de lecture que de corrompre les données enregistrées. Lorsque le pirate informatique provoque volontairement des erreurs de lecture en utilisant des pics de tension ou un faisceau laser ou autres, on dit que le processeur de sécurité est victime d'une attaque en lecture. Ainsi, dans le contexte des processeurs de sécurité, une erreur de lecture permet de détecter assez sûrement une tentative de cryptanalyse alors qu'une défaillance d'un bloc mémoire peut être une défaillance accidentelle causée, par exemple, par le vieillissement.

L'invention vise à remédier à cet inconvénient. Elle a donc pour objet un procédé de détection d'une erreur de lecture conforme à la revendication 1.

Le procédé ci-dessus permet de distinguer, et donc de détecter, une erreur de lecture d'une erreur causée par la corruption des données enregistrées. En effet, lors de la seconde itération des étapes b) et c) ci-dessus, les valeurs des premier et second exemplaires sont nécessairement différentes si au moins l'une de ces valeurs est corrompue. A l'inverse, l'identité de ces valeurs lors de la seconde itération des étapes b) et c) identifie de façon certaine une erreur de lecture de la donnée.

Dès lors, il est possible de mettre en oeuvre des mesures appropriées différentes pour répondre à une erreur de lecture ou à une corruption des données enregistrées. Par exemple, le fait de détecter une erreur de lecture permet d'éviter de mettre en oeuvre inutilement des mesures visant à corriger les données enregistrées alors que celles-ci ne sont pas corrompues. De plus, dans le cas d'un processeur de sécurité, la détection d'une erreur de lecture permet de déclencher la mise en oeuvre de contre-mesure pour empêcher la cryptanalyse.

Les modes de réalisation de ce procédé de détection peuvent comporter une ou plusieurs des caractéristiques des revendications dépendantes.

Les modes de réalisation du procédé de détection ci-dessus présentent en outre les avantages suivants.
- l'utilisation d'un code de détection d'erreur permet de restaurer le fonctionnement du procédé de détection d'une erreur de lecture même après une défaillance d'un bloc mémoire,
- l'utilisation d'un code de correction d'erreur permet de restaurer le fonctionnement du procédé de détection d'erreur de lecture même après que les valeurs des premier et second exemplaires de la donnée aient été corrompues tout en limitant le nombre de codes de correction d'erreur enregistrés,
- le choix de blocs mémoires pour y enregistrer une nouvelle donnée uniquement parmi les blocs mémoires non mémorisés comme étant défectueux permet d'éviter de réutiliser des blocs mémoires défectueux pour l'enregistrement de données,
- l'enregistrement d'une valeur transformée dans la première zone mémoire différente de la valeur enregistrée dans la seconde zone mémoire permet d'augmenter la probabilité que les valeurs lues pour les premier et second exemplaires soient différentes en cas d'attaques en lecture.

L'invention a également pour objet un procédé de protection d'un processeur de sécurité contre une attaque en lecture conforme à la revendication 6.

L'invention a également pour objet un support d'enregistrement d'informations comportant des instructions pour la mise en oeuvre du procédé de détection ou de protection ci-dessus lorsque ces instructions sont exécutées par un calculateur électronique.

Enfin, l'invention a également pour objet un processeur de sécurité conforme à la revendication 8.

Les modes de réalisation de ce processeur de sécurité peuvent comporter une ou plusieurs des caractéristiques des revendications dépendantes.

L'invention sera mieux comprise à la lecture de la description qui va suivre, donnée uniquement à titre d'exemple non limitatif et faite en se référant aux dessins sur lesquels :
- la figure 1 est une illustration schématique d'un terminal de réception de contenus multimédias embrouillés associé à un processeur de sécurité,
- la figure 2 est une illustration schématique d'une organisation d'une mémoire du processeur de sécurité de la figure 1 ;
- la figure 3 est un organigramme d'une phase d'écriture de données dans la mémoire de la figure 2 ;
- la figure 4 est un organigramme d'un procédé de protection du processeur de sécurité de la figure 1; et
- la figure 5 est un organigramme d'un autre mode de réalisation d'un procédé de protection du processeur de sécurité de la figure 1.

Dans ces figures les mêmes références sont utilisées pour désigner les mêmes éléments.

Dans la suite de cette description, les caractéristiques et fonctions bien connues de l'homme du métier ne sont pas décrites en détail. De plus, la terminologie utilisée est celle des systèmes d'accès conditionnels à des contenus multimédias. Pour plus d'informations sur cette terminologie, le lecteur peut se reporter au document suivant :
« Functional Model of Conditional Access System », EBU Review, Technical European Broadcasting Union, Brussels, BE, n° 266, 21 décembre 1995.

L'invention s'applique en particulier au domaine du contrôle d'accès pour la fourniture de contenus multimédias payants tels que la télévision payante.

Il est connu de diffuser plusieurs contenus multimédias en même temps. Pour cela, chaque contenu multimédia est diffusé sur son propre canal ou « chaine ». Un canal correspond typiquement à une chaine de télévision.

Dans cette description, on désigne plus spécifiquement par « contenu multimédia » un contenu audio et/ou visuel destiné à être restitué sous une forme directement perceptible et compréhensible par un être humain. Typiquement, un contenu multimédia correspond à une succession d'images formant un film, une émission de télévision ou de la publicité. Un contenu multimédia peut également être un contenu interactif tel qu'un jeu.

Pour sécuriser et soumettre la visualisation des contenus multimédias à certaines conditions, comme la souscription d'un abonnement payant par exemple, les contenus multimédias sont diffusés sous forme embrouillée et non pas en clair.

Plus précisément, chaque contenu multimédia est divisé en une succession de cryptopériodes. Pendant toute la durée d'une cryptopériode, les conditions d'accès au contenu multimédia embrouillé demeurent inchangées. En particulier, pendant toute la durée d'une cryptopériode, le contenu multimédia est embrouillé avec le même mot de contrôle. Généralement, le mot de contrôle varie d'une cryptopériode à l'autre.

De plus, le mot de contrôle est généralement spécifique à un contenu multimédia, ce dernier étant aléatoirement ou pseudo aléatoirement tiré.

Ici, les termes « embrouiller » et « chiffrer » sont considérés comme des synonymes. Il en est de même pour les termes « désembrouiller » et « déchiffrer ».

Le contenu multimédia en clair correspond au contenu multimédia avant que celui-ci ne soit embrouillé. Celui-ci peut être rendu directement compréhensible par un être humain sans avoir recours à des opérations de désembrouillage et sans que sa visualisation soit soumise à certaines conditions.

Les mots de contrôle nécessaires pour désembrouiller les contenus multimédias sont transmis de manière synchronisée avec les contenus multimédias. Pour cela, par exemple, les mots de contrôle sont multiplexés avec le contenu multimédia embrouillé.

Pour sécuriser la transmission des mots de contrôle, ceux-ci sont transmis aux terminaux sous forme de cryptogrammes contenus dans des messages ECM (Entitlement Control Message). On désigne ici par « cryptogramme » une information insuffisante à elle seule pour retrouver le mot de contrôle en clair. Ainsi, si la transmission du mot de contrôle est interceptée, la seule connaissance du cryptogramme du mot de contrôle ne permet pas de retrouver le mot de contrôle permettant de désembrouiller le contenu multimédia.

Pour retrouver le mot de contrôle en clair, c'est-à-dire le mot de contrôle permettant de désembrouiller directement le contenu multimédia, celui-ci doit être combiné avec une information secrète. Par exemple, le cryptogramme du mot de contrôle est obtenu en chiffrant le mot de contrôle en clair avec une clé cryptographique. Dans ce cas, l'information secrète est la clé cryptographique permettant de déchiffrer ce cryptogramme. Le cryptogramme du mot de contrôle peut aussi être une référence à un mot de contrôle stocké dans une table contenant une multitude de mots de contrôle possibles. Dans ce cas, l'information secrète est la table associant à chaque référence un mot de contrôle en clair.

L'information secrète doit être préservée en lieu sûr. Pour cela, il a déjà été proposé de stocker l'information secrète dans des processeurs de sécurité tels que des cartes à puce directement connectées à chacun des terminaux.

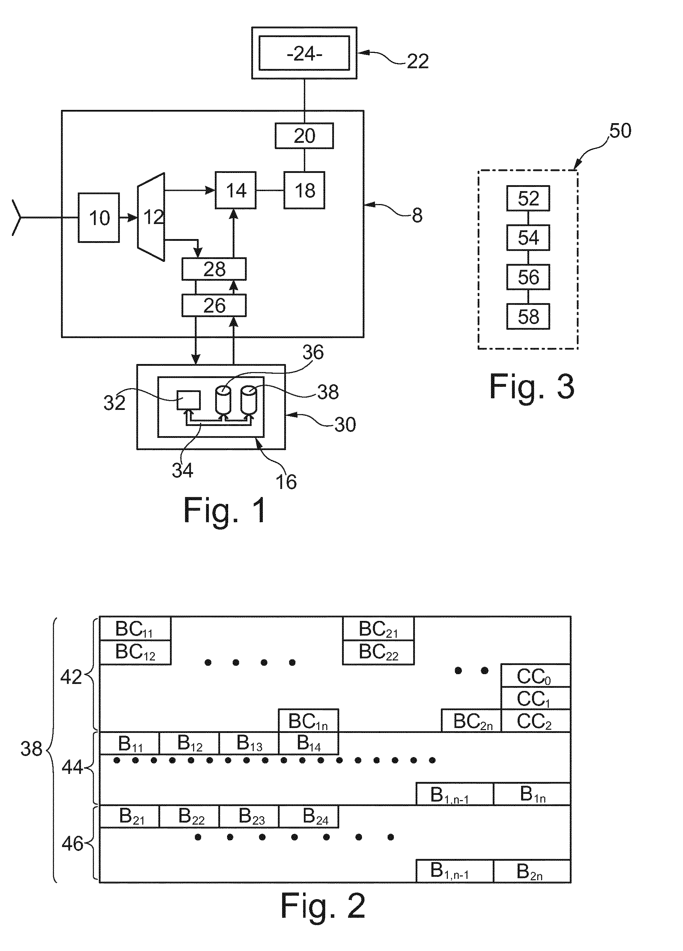

La figure 1 représente un terminal 8 destiné à être utilisé dans un tel système de contrôle d'accès conditionnel. Le terminal 8 désembrouille un canal pour l'afficher en clair sur un afficheur.

Le terminal 8 comprend un récepteur 10 de contenus multimédias diffusés. Ce récepteur 10 est raccordé à l'entrée d'un démultiplexeur 12 qui transmet le contenu multimédia à un désembrouilleur 14 et les messages ECM et EMM (Entitlement Management Message) à un processeur de sécurité 16.

Le désembrouilleur 14 désembrouille le contenu multimédia embrouillé à partir du mot de contrôle transmis par le processeur 16. Le contenu multimédia désembrouillé est transmis à un décodeur 18 qui le décode. Le contenu multimédia décompressé ou décodé est transmis à une carte graphique 20 qui pilote l'affichage de ce contenu multimédia sur un afficheur 22 équipé d'un écran 24. L'afficheur 22 affiche en clair le contenu multimédia sur l'écran 24. Par exemple, l'afficheur 22 est une télévision, un ordinateur ou encore un téléphone fixe ou mobile. Ici, l'afficheur 22 est une télévision.

Typiquement, l'interface entre le terminal 8 et le processeur 16 comprend un lecteur 26 géré par un module 28 de contrôle d'accès. Ici, le lecteur 26 est un lecteur de cartes à puce. Le module 28 gère notamment :
- la transmission des messages ECM et EMM démultiplexés au processeur 16, et
- la réception des mots de contrôle déchiffrés par le processeur 16 et leur transmission au désembrouilleur 14.

Le processeur 16 traite des informations confidentielles telles que des clés cryptographiques ou des titres d'accès aux contenus multimédias. Pour préserver la confidentialité de ces informations, il est conçu pour être le plus robuste possible vis-à-vis des tentatives d'attaques menées par des pirates informatiques. Il est donc plus robuste vis-à-vis de ces attaques que les autres composants du terminal 8. En particulier, les mémoires qu'il comporte sont uniquement accessibles et utilisées par ce processeur 16. Ici, le processeur 16 est le processeur de sécurité d'une carte à puce 30.

Le processeur 16 comprend notamment un calculateur électronique 32 programmable raccordé par l'intermédiaire d'un bus 34 de transmission d'informations à une mémoire électronique volatile 36 et à une mémoire électronique non volatile 38.

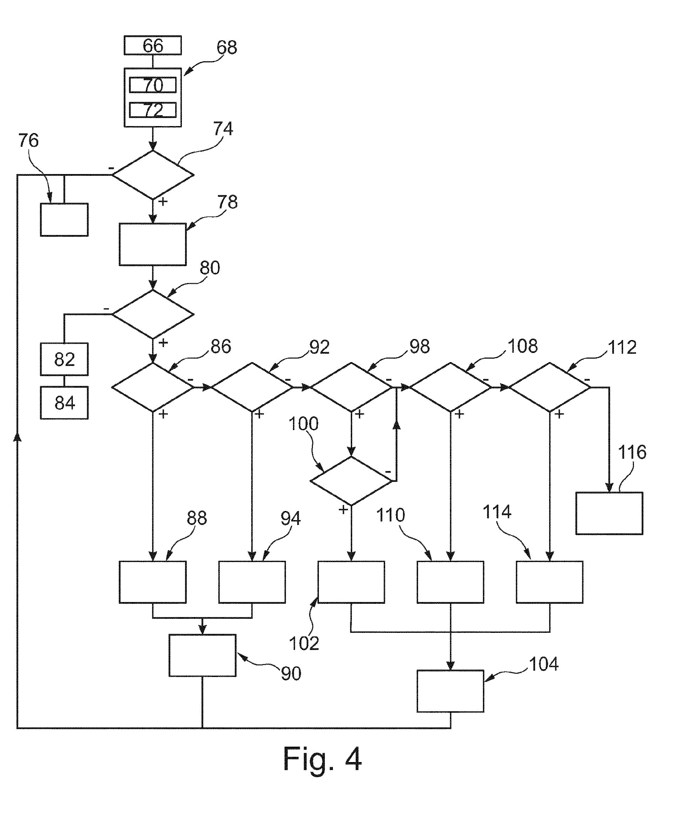

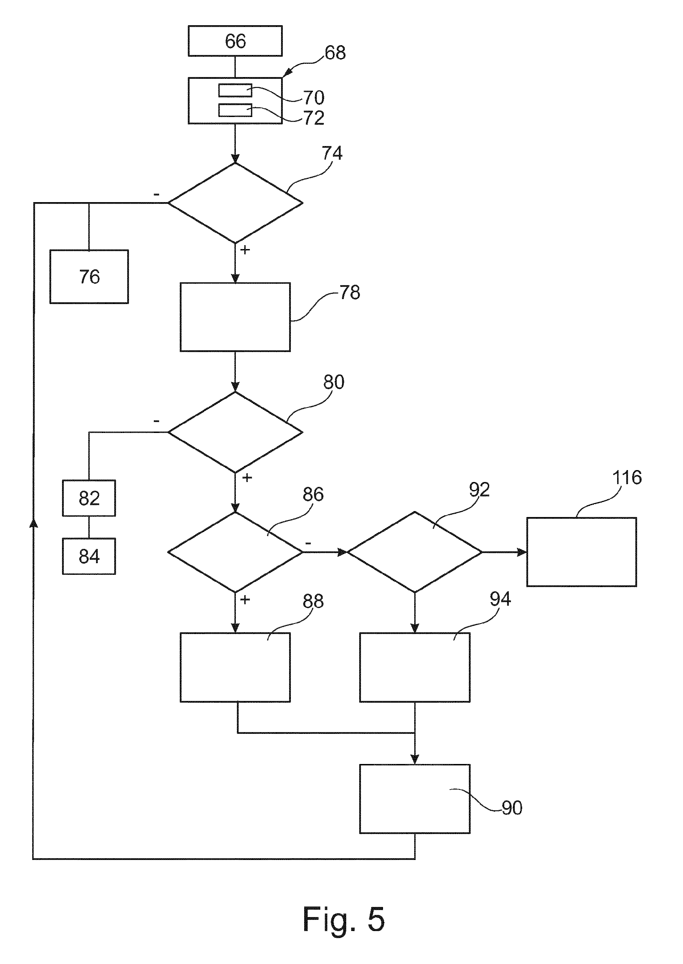

La mémoire 36 est typiquement connue sous l'acronyme de RAM (Random Access Memory). La mémoire 38 conserve les données qui sont enregistrées même en absence d'alimentation du processeur 16. De plus, la mémoire 38 est une mémoire réinscriptible. Typiquement, il s'agit d'une EEPROM (Electrically Erasable Programmable Read Only Memory) ou d'une mémoire flash. La mémoire 38 contient des informations confidentielles nécessaires au désembrouillage des contenus multimédias. Ici, elle contient aussi les instructions nécessaires à l'exécution du procédé de la figure 4 ou 5.

La figure 2 représente plus en détail différentes zones de la mémoire 38. Ici, la mémoire 38 comprend les zones de mémoire suivantes :
- une zone 42 de contrôle,
- une première zone 44 d'enregistrement de données, et
- une seconde zone 46 d'enregistrement de données.

Chaque zone de mémoire est définie par une adresse de début et une adresse de fin. Ici chaque zone occupe une plage d'adresses contiguës dans la mémoire 38. Chaque zone est divisée en plusieurs blocs mémoires. Par exemple, les zones 42, 44 et 46 contiennent chacune plus de 100 ou 400 blocs mémoires. La taille de chaque bloc mémoire fait plusieurs octets. Ici, les blocs mémoires de ces zones font tous la même taille. Par exemple, cette taille est supérieure ou égale à 64o ou 128o. Les tailles des zones 44 et 46 sont identiques.

La zone 44 est divisée en P blocs mémoires B₁ⱼ de même taille où l'indice j identifie la position du début du bloc B₁ⱼ par rapport à l'adresse de début de la zone 44.

La zone 46 est également divisée en P blocs mémoires B₂ⱼ de même taille que les blocs B₁ⱼ. L'indice j identifie la position du début du bloc B₂ⱼ par rapport à l'adresse de début de la zone 46. Ici, pour simplifier la réalisation, le décalage entre le début du bloc B₂ⱼ et l'adresse de début de la zone 46 est identique au décalage qui existe entre le début du bloc B₁ⱼ et l'adresse de début de la zone 44. Dans ces conditions, les blocs B₁ⱼ et B₂ⱼ sont dit « appariés ».

La zone 42 comprend 2P blocs mémoires CBᵢⱼ de mêmes tailles. Chaque bloc CBᵢⱼ est associé à un bloc Bᵢⱼ de la zone 44 ou 46. L'indice i prend la valeur « 1 » pour identifier la zone 44 et la valeur « 2 » pour identifier la zone 46.

Ici, chaque bloc CBᵢⱼ comprend notamment les informations suivantes :
- l'indication si le bloc Bᵢⱼ associé est libre, c'est-à-dire qu'il peut être utilisé pour enregistrer une nouvelle donnée,
- éventuellement, l'indication du bloc mémoire suivant lié à ce bloc Biⱼ ou l'indication que ce bloc Bᵢⱼ est le dernier bloc d'une chaîne de blocs liés,
- un code CDᵢⱼ de détection d'erreur,
- un masque MRᵢⱼ de recouvrement, et
- une marque MDᵢⱼ indiquant si le bloc Bᵢⱼ est défectueux ou non.

Le code CDᵢⱼ est construit uniquement à partir de la valeur de la donnée contenue dans le bloc Bᵢⱼ. Ce code CDᵢⱼ rajoute suffisamment de redondance à la donnée contenue dans le bloc Bᵢⱼ pour qu'il soit possible de détecter un ou plusieurs bits erronés dans la valeur de la donnée enregistrée dans ce bloc.

Par exemple, le code CDᵢⱼ est un contrôle de redondance cyclique plus connu sous l'acronyme CRC (Cyclic Redundancy Check). Par exemple, le code CDᵢⱼ est un CRC 32.

Le masque MRᵢⱼ de recouvrement est une valeur utilisée pour transformer de façon réversible la valeur Dᵢⱼ de la donnée à enregistrer dans le bloc Bᵢⱼ en une valeur transformée Dᵢⱼ qui est enregistrée dans ce bloc Bᵢⱼ Cette transformation est réversible de sorte que, à partir de la valeur du masque dMRᵢⱼ et de la valeur transformée D'ᵢⱼ, il est possible de retrouver la valeur Dᵢⱼ de la donnée.

La marque MDᵢⱼ permet de mémoriser si le bloc Bᵢⱼ est défectueux ou non. Un bloc Bᵢⱼ défectueux est par exemple un bloc mémoire comportant des bits d'informations dont les valeurs ne peuvent plus être réinscrites ou modifiées, ce qui entraîne l'apparition d'erreurs dans la valeur enregistrée dans ce bloc mémoire.

La zone 42 comprend également des codes correcteurs d'erreur CC₀, CC₁ et CC₂. Le Code CC₀ est construit à partir du contenu des zones 44 et 46. Il ajoute suffisamment de redondance au contenu mémorisé dans les zones 44 et 46 pour qu'il soit possible non seulement de détecter mais également de corriger un ou plusieurs bits erronés des données enregistrées dans ces zones 44 et 46. De façon similaire, les codes CC₁ et CC₂ ajoutent suffisamment de redondances au contenu, respectivement, des zones 44 et 46, pour permettre de corriger k bits erronés dans les zones, respectivement, 44 et 46, où k est un entier naturel supérieur ou égal à un et, de préférence, supérieur ou égal à cinq ou dix. Contrairement au code CC₀, les codes CC₁ et CC₂ permettent uniquement de corriger des bits erronés dans, respectivement, les zones 44 et 46. Par exemple, ces codes de correction d'erreur sont des codes de Reed Solomon.

La figure 3 représente une phase 50 d'enregistrement d'une donnée confidentielle dans la mémoire 38. La donnée confidentielle est typiquement une clé cryptographique pour déchiffrer des mots de contrôle ou des titres d'accès autorisant ou non l'accès et le désembrouillage de contenus multimédias.

Si la taille de la donnée est supérieure à la taille d'un bloc mémoire, alors celle-ci est d'abord divisée en plusieurs portions de taille inférieure chacune à la taille d'un bloc mémoire pour se ramener au cas d'une donnée dont la taille est inférieure à la taille d'un bloc mémoire. Dans ce cas, les différentes portions de la même donnée sont par exemple chaînées les unes avec les autres en indiquant dans chaque bloc BCᵢⱼ l'adresse du bloc mémoire suivant.

Initialement, lors d'une étape 52, le calculateur 32 choisit parmi les différents blocs mémoires des zones 44 et 46 une paire de blocs mémoires Bᵢⱼ satisfaisant aux conditions suivantes :
- les blocs Bᵢⱼ et B₂ⱼ sont appariés,
- les blocs Bᵢⱼ et B₂ⱼ sont libres, et
- les blocs Bᵢⱼ et B₂ⱼ ne sont pas marqués comme étant défectueux.

Le calculateur 32 vérifie si les blocs Bᵢⱼ et B₂ⱼ choisis sont libres et non défectueux à partir des informations contenues dans les blocs BC₁ⱼ et BC₂ⱼ de la zone de contrôle 42.

Par la suite, la valeur de la donnée à enregistrer dans les blocs B₁ⱼ et B₂ⱼ est notée, respectivement, D₁ⱼ et D₂ⱼ. Ces valeurs sont identiques.

Lors d'une étape 54, le calculateur 32 calcule la nouvelle valeur des codes CD₁ⱼ et CD₂ⱼ permettant de détecter une erreur, respectivement, dans les valeurs D₁ⱼ et D₂ⱼ. Lors de cette étape 54, le calculateur 32 calcule également les nouvelles valeurs des codes CC₀, CC₁ et CC₂ de correction d'erreur et les enregistre dans la zone 42.

Les nouvelles valeurs des codes CD₁ⱼ et CD₂ⱼ sont enregistrées, respectivement, dans les blocs BC₁ⱼ et BC₂ⱼ.

Le calculateur 32 enregistre également dans ses blocs BC₁ⱼ et BC₂ⱼ une indication selon lequel les blocs mémoires B₁ⱼ et B₂ⱼ ne sont plus libres.

Ensuite, lors d'une étape 56, les valeurs D₁ⱼ et D₂ⱼ sont transformées, respectivement, en valeur D'₁ⱼ et D'₂ⱼ en fonction de la valeur des masques, respectivement, MR₁ⱼ et MR₂ⱼ. La valeur des masques MR₁ⱼ et MR₂ⱼ est contenue dans les blocs BC₁ⱼ et BC₂ⱼ. Les valeurs des masques MR₁ⱼ et MR₂ⱼ sont différentes de manière à ce que les valeurs transformées D'₁ⱼ et D'₂ⱼ soient différentes.

Par exemple, la transformation est réalisée à l'aide de la relation suivante : D'ᵢⱼ = Dᵢⱼ ⊕ MRᵢⱼ, où « ⊕ » est l'opération XOR.

Ensuite, lors d'une étape 58, les valeurs D'₁ⱼ et D'₂ⱼ sont physiquement enregistrées, respectivement, dans les blocs mémoires B₁ⱼ et B₂ⱼ. La phase 50 se termine alors.

Lors de son utilisation, le processeur 16 exécute un programme par exemple pour déchiffrer des mots de contrôle. Lors de l'exécution de ce programme, des instructions requièrent la lecture d'une donnée enregistrée dans la mémoire 38, telle qu'une clé cryptographique ou un titre d'accès. Le procédé de la figure 4 est alors exécuté.

Initialement, lors d'une étape 66, l'adresse du bloc mémoire à lire est enregistrée dans un registre non volatile d'adresse de lecture. Par exemple, ce registre est contenu dans la mémoire 38.

Ensuite, on procède à une étape 68 de lecture de la donnée dans la mémoire 38 à l'adresse spécifiée. Plus précisément, lors d'une opération 70, les valeurs D'₁ⱼ et D'₂ⱼ contenues dans les blocs mémoires appariés, respectivement, B₁ⱼ et B₂ⱼ sont lues.

Ensuite, lors d'une opération 72, le calculateur 32 applique la transformation inverse à celle appliquée lors de l'étape 56 du procédé de la figure 3. Pour cela, il utilise les valeurs des masques MR₁ⱼ et MR₂ⱼ . Les valeurs obtenues par application de cette transformation inverse pour les valeurs D'₁ⱼ et D'₂ⱼ sont notées par la suite, respectivement, valeurs D₁ⱼ et D₂ⱼ. On notera qu'en cas d'erreur de lecture ou de corruption des données enregistrées, les valeurs D₁ⱼ et D₂ⱼ ne sont pas nécessairement identiques aux valeurs D₁ⱼ et D₂ⱼ enregistrées lors de la phase 50 d'écriture.

Lors d'une étape 74, les valeurs D₁ⱼ et D₂ⱼ lues sont comparées. Si ces valeurs sont égales, alors on procède à une étape 76 lors de laquelle le programme exécuté par le processeur 16 traite la valeur D₁ⱼ et poursuit son exécution normale. Par exemple, le calculateur 32 déchiffre un mot de contrôle à l'aide de la valeur D₁ⱼ. Lors de l'étape 76, aucune erreur de lecture n'est détectée. De plus, lors de l'étape 76, le registre d'adresse de lecture est effacé.

A l'inverse, si les valeurs D₁ⱼ et D₂ⱼ lues ne sont pas identiques, alors le programme en cours d'exécution est interrompu et une routine de vérification est exécutée par le calculateur 32. Par exemple, le processeur de sécurité est réinitialisé et lors du redémarrage du processeur de sécurité, la routine de vérification est systématiquement exécutée si le registre d'adresse de lecture n'est pas vide. La routine de vérification peut également être lancée par un déroutement sur erreur de l'exécution du programme.

Une fois cette routine de vérification lancée, lors d'une étape 78, le calculateur 32 procède à une nouvelle tentative de lecture de la donnée enregistrée dans la mémoire 38. La nouvelle tentative de lecture consiste à lire la donnée correspondant à l'adresse enregistrée dans le registre d'adresse de lecture. L'étape 78 est par exemple identique à l'étape 68.

Ensuite, lors d'une étape 80, le calculateur procède à une nouvelle comparaison des nouvelles valeurs D₁ⱼ et D₂ⱼ lues lors de l'étape 78.

Si cette fois-ci, les valeurs D₁ⱼ et D₂ⱼ sont identiques, lors d'une étape 82, une erreur de lecture est détectée. En effet, la différence entre les valeurs D₁ⱼ et D₂ⱼ lues lors de l'étape 68 ne provient pas d'une corruption des données enregistrées dans la mémoire 38. En fait, la détection d'une erreur de lecture indique dans le cas d'un processeur de sécurité, avec une très forte probabilité, que la première tentative de lecture lors de l'étape 68 a échouée à cause d'une attaque en lecture.

Dès lors, en réponse, lors d'une étape 84, le calculateur 32 déclenche une contre-mesure limitant le désembrouillage des contenus multimédias. Ici, il empêche temporairement ou définitivement le désembrouillage des contenus multimédias à l'aide du processeur 16. Typiquement, pour cela le déchiffrement des mots de contrôle est inhibé.

Plus précisément, la contre-mesure peut être l'une des contre-mesures suivantes :
- l'effacement des données confidentielles contenues dans la mémoire 38 telles que les clés cryptographiques et les titres d'accès,
- le déclenchement de l'autodestruction du processeur 16 de manière à le rendre définitivement inutilisable, et
- l'arrêt du déchiffrement des mots de contrôle temporairement ou définitif.

Lors de l'étape 84, si le processeur 16 est encore utilisable malgré la mise en oeuvre d'une contre-mesure, le registre d'adresse de lecture est effacé.

Si les valeurs D₁ⱼ et D₂ⱼ lues lors de l'étape 78 sont différentes, alors cela signifie que les données enregistrées sont certainement corrompues. Il ne s'agit donc pas d'une erreur de lecture.

Dans ce cas, lors d'une étape 86, le calculateur 32 vérifie à l'aide du code CD₁ⱼ si la valeur D₁ⱼ est erronée.

Si la valeur D₁ⱼ n'est pas erronée, alors on procède à une étape 88 d'enregistrement de la valeur D₁ⱼ dans de nouveaux blocs mémoires appariés des zones 44 et 46. Par exemple, l'étape 88 est réalisée de façon similaire à la phase 50 d'écriture. Dès, lors c'est la valeur enregistrée dans ces nouveaux blocs qui sera utilisée lors de la prochaine lecture de la même donnée.

Ensuite, lors d'une étape 90, les marques MD₁ⱼ et MD₂ⱼ sont mises à jour pour indiquer et mémoriser que les précédents blocs B₁ⱼ et B₂ⱼ sont défectueux. Ici, le bloc B₁ⱼ est indiqué comme étant défectueux alors que la valeur qui y était enregistrée était correcte. Cela permet de conserver une gestion simple de l'appariement des blocs mémoires.

Lors de l'étape 90, le registre d'adresse de lecture est également effacé. Ensuite, la valeur D₁ⱼ est traitée par le programme qui poursuit son exécution par l'étape 76.

Si lors de l'étape 86, la valeur D₁ⱼ est erronée, alors on procède à une étape 92 de vérification à l'aide du code CD₂ⱼ si la valeur D₂ⱼ est erronée ou correcte.

Si la donnée D₂ⱼ est correcte, alors on procède à une étape 94 identique à l'étape 88 sauf que c'est la valeur D₂ⱼ qui est utilisée à la place de la valeur D₁ⱼ. L'étape 94 se poursuit également par l'étape 90.

Si les valeurs D₁ⱼ et D₂ⱼ sont erronées, alors, le calculateur procède à une étape 98 lors de laquelle il effectue une première tentative de correction de ces valeurs en utilisant le code CC₀. Cette étape 98 permet au calculateur 32 de corriger k bits erronés répartis dans les zones 44 et 46. S'il y a moins de k bits erronés, la correction est alors considérée comme ayant réussi. Dans ce cas, on obtient des valeurs D_{c1j} et D_{c2j} corrigées, respectivement, pour les valeurs D₁ⱼ et D₂ⱼ,

Dans ce cas, lors d'une étape 100, le calculateur 32 compare les valeurs D_{c1j} et D_{c2j}.

Si les valeurs D_{c1j} et D_{c2j} sont identiques, lors d'une étape 102, la valeur D_{c1j} est enregistrée dans deux nouveaux blocs mémoires, respectivement, des zones 44 et 46. Cette étape est par exemple identique à l'étape 88 sauf que c'est la valeur D_{c1j} qui est utilisée à la place de la valeur D₁ⱼ.

Ensuite, on procède à une étape 104 lors de laquelle les blocs B₁ⱼ et B₂ⱼ sont marqués comme étant défectueux. Cette étape 104 est par exemple identique à l'étape 90. Le procédé retourne ensuite à l'étape 76.

Si les valeurs D_{c1j} et D_{c2j} sont différentes ou si la correction d'erreur avec le code CC₀ n'a pas réussi, le calculateur 32 procède à une étape 108 lors de laquelle il essaie de corriger les données de la zone 44 à l'aide du code CC₁. Si la correction réussit, le calculateur 32 obtient une valeur D_{c1j} corrigée de la valeur D₁ⱼ. Il est alors procédé à une étape 110 identique à l'étape 102. L'étape 110 se poursuit par l'étape 104.

Si l'étape 108 est infructueuse et ne permet pas de corriger la valeur D₁ⱼ, alors le calculateur exécute une étape 112 lors de laquelle il tente de corriger la valeur D₂ⱼ à l'aide du code CC₂. Si cette étape 112 réussit, le calculateur 32 obtient une valeur corrigée D_{c2j}. Il est alors procédé à une étape 114 identique à l'étape 94 sauf que c'est la valeur D_{c2j} qui est utilisée à la place de la valeur D₂ⱼ. L'étape 114 se poursuit par l'étape 104.

S'il n'a pas été possible de corriger ni la valeur D₁ⱼ ni la valeur D₂ⱼ, alors, lors d'une étape 116, le calculateur 32 établit que la donnée est perdue puisque celle-ci est erronée et ne peut pas être corrigée. Lors de cette étape 116, le calculateur 32 marque les blocs mémoires B₁ⱼ et B₂ⱼ comme étant défectueux. Cette opération est réalisée comme décrit en regard de l'étape 90. Ensuite, soit le programme est capable de gérer l'absence de valeur pour cette donnée et dans ce cas-là l'exécution du programme se poursuit. Si l'exécution du programme ne peut pas se poursuivre sans la valeur de la donnée, alors l'exécution du programme est arrêtée et le processeur de sécurité est par exemple réinitialisé.

La figure 5 représente un procédé de protection du processeur 16 identique au procédé de la figure 4 sauf que les codes de correction d'erreur ne sont pas utilisés. Ainsi, dans ce procédé, les étapes 98 à 114 sont omises. De plus, dans le cas où les valeurs D₁ⱼ et D₂ⱼ sont détectées comme étant toutes les deux erronées, on procède directement à l'étape 116.

De nombreux autres modes de réalisation sont possibles. Par exemple, les opérations de transformation de la valeur enregistrée peuvent être omises. Dans ce cas, les étapes 56 et 72 sont omises.

L'allocation de mémoire peut être une allocation de mémoire logique ou physique.

L'algorithme utilisé pour détecter une erreur dans la valeur D₁ⱼ peut être différent de l'algorithme utilisé pour détecter une erreur dans la valeur D₂ⱼ. Dans ce cas, les valeurs des codes CD₁ⱼ et CD₂ⱼ sont différentes.

En variante, le code de détection d'une erreur est aussi utilisé après la correction de la valeur enregistrée à l'aide du code de correction d'erreur. Cela permet de vérifier, si nécessaire, que la valeur corrigée est correcte.

Dans une autre variante, le code CC₀ est omis, ou à l'inverse, les codes CC₁ et CC₂ sont omis ou aucun code correcteur d'erreur n'est utilisé.

Dans une autre variante, un code correcteur d'erreur est uniquement utilisé pour une seule des zones mémoires.

Le code correcteur d'erreur n'est pas nécessairement commun pour toute une zone de mémoire. En variante, le code correcteur d'erreur est construit pour un groupe restreint de plusieurs blocs d'une zone mémoire. Un code correcteur d'erreur peut également être construit pour chaque bloc mémoire et uniquement pour ce bloc mémoire. Dans ce cas, de préférence, le code correcteur d'erreur remplace le code de détection d'erreur. En effet, quasiment tous les codes de correction d'erreur permettent également la détection d'une erreur.

Le code correcteur d'erreur peut également être commun aux valeurs D₁ⱼ et D₂ⱼ.

Le code correcteur d'erreur peut être construit selon d'autres algorithmes tels que l'algorithme de Hamming ou un turbocode.

Lorsqu'un bloc mémoire B₁ⱼ est détecté comme étant défectueux, il n'est pas nécessaire que le bloc mémoire B₂ⱼ qui lui est apparié soit également systématiquement marqué comme étant également défectueux. En variante, le bloc B₂ⱼ est marqué comme étant défectueux uniquement si le code CD₂ⱼ associé à ce bloc confirme que la donnée qu'il contient est également erronée. Dans le cas contraire, une table associe à l'adresse de chaque bloc B₁ⱼ l'adresse du bloc apparié B₂ⱼ. Dans ce cas, cette table est modifiée pour associer un nouveau bloc B'₁ⱼ utilisé pour remplacer le précédent bloc B₁ⱼ à l'adresse du bloc B₂ⱼ.

La zone 42 de contrôle peut être enregistrée dans les blocs de la zone 44. Dans ces conditions, comme tous les blocs de cette zone 44, elle est dupliquée dans la zone 46. Cela permet donc de protéger la zone de contrôle contre la corruption de données ou les erreurs de lecture de la même façon que de n'importe quel autre bloc de ces zones 44 et 46.

La transformation de la valeur Dᵢⱼ en une valeur D'ᵢⱼ peut être omise ou uniquement mise en oeuvre pour l'une des zones 44 ou 46.

L'ordre de certaines opérations ou étapes des procédés décrits ici peut être modifié. Par exemple, le calcul du code de détection d'erreur est réalisé après la transformation de la valeur Dᵢⱼ en une valeur transformée D'ᵢⱼ. Dans ce cas, lors de la lecture, la vérification que la donnée lue est correcte ou erronée est réalisée à partir de la valeur D'ᵢⱼ et non pas de la valeur Dᵢⱼ.

En variante, avant de mettre à jour la marque MDᵢⱼ d'un bloc défectueux, le calculateur vérifie que le bloc Bᵢⱼ est réellement défectueux. Par exemple, il réalise les opérations suivantes :
a) Ecriture d'une valeur Dᵢⱼ dans le bloc Bᵢⱼ concerné, puis
b) Lecture de la valeur Dᵢⱼ enregistrée dans ce bloc B_{ij,}
c) Comparaison des valeurs écrite et lue, puis
d) Si ces valeurs sont égales, les opérations a) à c) sont réitérées au moins N fois. Sinon, la marque MDᵢⱼ est mise à jour pour indiquer que le bloc Bᵢⱼ est défectueux.

Typiquement, le nombre N est supérieur à deux et, de préférence, supérieur à dix.

Si les opérations précédentes a) à d) sont souvent mises en oeuvre pour un même bloc Bᵢⱼ mais que la vérification précédente conduit à chaque fois à laisser le bloc Bᵢⱼ comme étant utilisable, une valeur particulière peut être affectée à la marque MDᵢⱼ indiquant que ce bloc Bᵢⱼ est peu sûr. Dans ces conditions, tant que cela est possible, le bloc Bᵢⱼ n'est pas choisi pour y enregistrer de nouvelles données. Par contre, s'il n'existe plus d'autres blocs mémoires plus sûrs disponibles, ce bloc Bᵢⱼ sera alors utilisé pour enregistrer une donnée.

Chacune des mémoires décrites ici peut être réalisée sous la forme d'un seul composant électronique ou d'une association de plusieurs composants électroniques raccordés indépendamment les uns des autres au calculateur 32. Par exemple, les zones 44 et 46 peuvent correspondre à deux mémoires physiquement distinctes reliées chacune par son propre bus de lecture au calculateur 32.

Plus de deux zones mémoires redondantes peuvent être mises en oeuvre. Dans ce cas, la valeur de la donnée copiée dans cette mémoire est copiée dans chacune de ces zones mémoires. Les procédés décrits ci-dessus peuvent facilement être adaptés au cas de W zones mémoires où W est un entier strictement supérieur à deux.

Ce qui a été décrit précédemment peut également s'appliquer à une mémoire non volatile.

## Revendications

1. Procédé de détection d'une erreur de lecture d'une donnée, ce procédé comportant :
a) l'enregistrement (50) d'un premier exemplaire de la donnée dans une première zone d'une mémoire électronique et l'enregistrement d'un second exemplaire de la donnée dans une seconde zone d'une mémoire électronique,
en réponse à une demande de lecture de la donnée :
b) la lecture (68) des valeurs des premier et second exemplaires de la donnée dans, respectivement, les première et seconde zones,
c) la comparaison (74) des valeurs lues des premier et second exemplaires de la donnée,
d) si les valeurs lues des premier et second exemplaires sont identiques, alors aucune erreur de lecture de cette donnée n'est détectée,
**caractérisé en ce que** :
e) si les valeurs lues des premier et second exemplaires sont différentes, alors les étapes b) et c) précédentes sont réitérées (78, 80), puis
f) si les valeurs lues lors de l'étape e) sont identiques, alors une erreur de lecture de cette donnée est détectée (82) et, sinon, aucune erreur de lecture de cette donnée n'est détectée.

2. Procédé selon la revendication 1, dans lequel le procédé comporte :
- l'association (54) à la valeur du premier exemplaire de la donnée d'un code de détection d'erreur ajoutant de la redondance à la donnée et permettant de détecter une erreur dans la valeur de cette donnée,
- si lors de l'étape f), les valeurs lues des premier et second exemplaires sont différentes, alors le procédé comporte la vérification (86) si la valeur lue du premier exemplaire est erronée ou au contraire correcte à l'aide du code de détection d'erreur associé cette valeur, et
- si la valeur lue du premier exemplaire est correcte, l'enregistrement (88) de la valeur du premier exemplaire dans un bloc mémoire de la seconde zone de mémoire différente du bloc mémoire où se trouvait le précédent second exemplaire de cette donnée de manière à former un nouveau second exemplaire de la donnée, puis
- l'utilisation du nouveau second exemplaire en lieu et place du précédent second exemplaire de la donnée lors de toute nouvelle itération des étapes b) et c).

3. Procédé selon l'une quelconque des revendications précédentes, dans lequel le procédé comporte :
- l'association (54) aux premier et second exemplaires de la donnée d'un code de correction d'erreur ajoutant suffisamment de redondance aux valeurs des premier et second exemplaires pour permettre de corriger un ou plusieurs bits erronés dans la valeur de chacun de ces exemplaires de la donnée,
- si lors de l'étape f), les valeurs lues des premier et second exemplaires sont différents, alors le procédé comporte :
• la correction (98) à l'aide du code de correction d'erreur des valeurs des premier et second exemplaires de la donnée pour obtenir des valeurs corrigées pour ces premier et second exemplaires, puis
• la comparaison (100) des valeurs corrigées des premier et second exemplaires, et
• si les valeurs corrigées sont identiques, l'enregistrement (102) de la valeur corrigée du premier exemplaire de la donnée dans des nouveaux blocs mémoires, respectivement, des première et de la seconde zones de mémoires différents des blocs mémoires où se trouvaient les précédents premier et second exemplaires de cette donnée de manière à former des nouveaux premier et second exemplaires de la donnée, puis
• l'utilisation des nouveaux premier et second exemplaires en lieu et place des précédents premier et second exemplaires lors de toute nouvelle itération des étapes b) et c).

4. Procédé selon la revendication 2 ou 3, dans lequel pour chaque bloc mémoire où se trouvait un précédent exemplaire de la donnée, le procédé comporte :
- la mémorisation (90, 104, 116) de ce bloc mémoire comme étant défectueux, et
- lors de l'allocation d'un nouveau bloc mémoire dans l'une des zones de mémoire pour y enregistrer une information, le choix (52) de ce bloc mémoire uniquement parmi les blocs mémoires de cette zone non mémorisés comme étant défectueux.

5. Procédé selon l'une quelconque des revendications précédentes, dans lequel,
- lors de l'enregistrement du premier exemplaire de la donnée, la valeur de la donnée est d'abord transformée (56) à l'aide d'une fonction de masquage inversible pour obtenir une valeur transformée différente de la valeur non transformée et différente de la valeur enregistrée du second exemplaire, puis c'est cette valeur transformée qui est enregistrée dans la première zone, et
- lors de la lecture du premier exemplaire, la transformation inverse est appliquée (72) à la valeur transformée enregistrée pour obtenir la valeur lue du premier exemplaire.

6. Procédé de protection d'un processeur de sécurité contre une attaque en lecture, ce processeur de sécurité exécutant (76) une routine de chiffrement ou de déchiffrement d'une information à l'aide d'une donnée confidentielle enregistrée dans des première et seconde zones de mémoire de ce processeur de sécurité, **caractérisé en ce que**:
- le processeur de sécurité détecte (82) une erreur de lecture de la donnée confidentielle en mettant en oeuvre un procédé conforme à l'une quelconque des revendications précédentes,
- si aucune erreur de lecture de la donnée confidentielle n'est détectée, le processeur de sécurité procède au chiffrement ou au déchiffrement (76) de l'information à l'aide de la donnée confidentielle lue, sinon
- en réponse à la détection d'une erreur de lecture, le processeur de sécurité déclenche (86) automatiquement une contre-mesure limitant le chiffrement ou le déchiffrement de l'information à l'aide de la donnée confidentielle lue, par rapport au cas où aucune erreur de lecture de cette donnée confidentielle n'est détectée.

7. Support (38) d'enregistrement d'informations, **caractérisé en ce qu'**il comporte des instructions pour la mise en oeuvre d'un procédé conforme à l'une quelconque des revendications précédentes, lorsque ces instructions sont exécutées par un calculateur électronique.

8. Processeur de sécurité comportant :
- une première (44) et une seconde (46) zones d'une mémoire électronique,
- un calculateur électronique (32) programmé pour :
a) enregistrer un premier exemplaire de la donnée dans la première zone et enregistrer un second exemplaire de la donnée dans la seconde zone,
en réponse à une demande de lecture de la donnée :
b) lire les valeurs des premier et second exemplaires de la donnée dans, respectivement, les première et seconde zones,
c) comparer les valeurs lues des premier et second exemplaires de la donnée, et
d) si les valeurs lues des premier et second exemplaires sont identiques, alors ne détecter aucune erreur de lecture de cette donnée,
**caractérisé en ce que** le calculateur électronique est également programmé pour :
e) si les valeurs lues des premier et second exemplaires sont différentes, réitérer les étapes b) et c) précédentes, puis
f) si les valeurs lues lors de l'étape e) sont identiques, alors détecter une erreur de lecture de cette donnée et, sinon, n'indiquer aucune erreur de lecture.

9. Processeur selon la revendication 8, dans lequel le processeur de sécurité est le processeur de sécurité d'une carte à puce (30).

10. Processeur selon l'une quelconque des revendications 8 à 9, dans lequel la mémoire électronique (38), dite première mémoire, est une mémoire non volatile et le processeur de sécurité comporte une seconde mémoire (36) volatile dans laquelle sont systématiquement copiées les données lues dans la première mémoire (38) afin d'être traitées par le calculateur électronique (32).

## Patentansprüche

1. Verfahren zur Erkennung eines Fehlers beim Lesen eines Datums, wobei dieses Verfahren umfasst:
a) das Aufzeichnen (50) eines ersten Exemplars des Datums in einer ersten Zone eines elektronischen Speichers und die Aufzeichnung eines zweiten Exemplars des Datums in einer zweiten Zone eines elektronischen Speichers,
als Antwort auf eine Anfrage nach Lesen des Datums;
b) das Lesen (68) der Werte der ersten und zweiten Exemplare des Datums in der ersten bzw. zweiten Zone,
c) das Vergleichen (74) der gelesenen Werte der ersten und zweiten Exemplare des Datums,
d) wenn die gelesenen Werte der ersten und zweiten Exemplare identisch sind, wird kein Fehler beim Lesen dieses Datums erkannt,
**dadurch gekennzeichnet, dass**:
e) wenn die gelesenen Werte der ersten und zweiten Exemplare unterschiedlich sind, werden die vorherigen Schritte b) und c) reiteriert (70, 80), dann
f) wenn die in Schritt e) gelesenen Werte identisch sind, wird ein Fehler beim Lesen dieses Datums erkannt (82) und andernfalls wird kein Fehler beim Lesen dieses Datums erkannt.

2. Verfahren nach Anspruch 1, wobei das Verfahren umfasst:
- das Zuordnen (54) zum Wert des ersten Exemplars des Datums eines Fehlererkennungscodes, der zu dem Datum eine Redundanz hinzufügt und es ermöglicht, einen Fehler in dem Wert dieses Datums zu erkennen,
- wenn in Schritt f) die gelesenen Werte der ersten und zweiten Exemplare unterschiedlich sind, umfasst das Verfahren nun die Überprüfung (86) mit Hilfe des diesem Wert zugeordneten Fehlererkennungscodes, ob der gelesene Wert des ersten Exemplars falsch oder aber richtig ist, und
- wenn der gelesene Wert des ersten Exemplars richtig ist, Aufzeichnen (88) des Werts des ersten Exemplars in einem Speicherblock der zweiten Speicherzone, der zu dem Speicherblock, in dem sich das vorherige zweite Exemplar dieses Datums befand, unterschiedlich ist, um ein neues zweites Exemplar des Datums zu bilden, dann
- Verwenden des neuen zweiten Exemplars an Ort und Stelle des vorherigen zweiten Exemplars des Datums bei jeder neuen Iteration der Schritte b) und c).

3. Verfahren nach einem der vorhergehenden Ansprüche, wobei das Verfahren umfasst:
- das Zuordnen (54) zu den ersten und zweiten Exemplaren des Datums eines Fehlerkorrekturcodes, der ausreichend Redundanz zu den Werten der ersten und zweiten Exemplare hinzufügt, um es zu ermöglichen, ein oder mehrere falsche Bits in dem Wert jedes dieser Exemplare des Datums zu korrigieren,
- wenn in Schritt f) die gelesenen Werte der ersten und zweiten Exemplare unterschiedlich sind, umfasst das Verfahren:
^{*} das Korrigieren (98) der Werte der ersten und zweiten Exemplare des Datums mit Hilfe des Fehlerkorrekturcodes, um korrigierte Werte für diese ersten und zweiten Exemplare zu erhalten, dann
* das Vergleichen (100) der korrigierten Werte der ersten und zweiten Exemplare, und
* wenn die korrigierten Werte identisch sind, das Aufzeichnen (102) des korrigierten Werts des ersten Exemplars des Datums in neuen Speicherblöcken bzw. ersten und zweiten unterschiedlichen Speicherzonen der Speicherblöcke, in denen sich die vorherigen ersten und zweiten Exemplare dieses Datums befanden, um neue erste und zweite Exemplare des Datums zu bilden, dann
* Verwenden der neuen ersten und zweiten Exemplare an Ort und Stelle der vorherigen ersten und zweiten Exemplare bei jeder neuen Iteration der Schritte b) und c).

4. Verfahren nach Anspruch 2 oder 3, bei dem für jeden Speicherblock, in dem sich ein vorheriges Exemplar des Datums befand, das Verfahren umfasst:
- das Speichern (90, 104, 116) dieses Speicherblocks als schadhaft, und
- bei der Zuweisung eines neuen Speicherblocks in einer der Speicherzonen, um hier eine Information aufzuzeichnen, die Auswahl (52) nur dieses Speicherblocks unter den Speicherblöcken dieser Zone, die nicht als schadhaft gespeichert sind.

5. Verfahren nach einem der vorhergehenden Ansprüche, bei dem
- beim Aufzeichnen des ersten Exemplars des Datums der Wert des Datums zuerst mit Hilfe einer inversiblen Maskierungsfunktion transformiert wird (56), um einen transformierten Wert, der sich von dem nicht transformierten Wert und dem aufgezeichneten Wert des zweiten Exemplars unterscheidet, zu erhalten, wobei dann dieser transformierte Wert in der ersten Zone aufgezeichnet wird, und
- beim Lesen des ersten Exemplars das inverse Transformieren an den aufgezeichneten transformierten Wert angelegt wird (72), um den gelesenen Wert des ersten Exemplars zu erhalten.

6. Verfahren zum Schutz eines Sicherheitsprozessors gegen einen Leseangriff, wobei dieser Sicherheitsprozessor (76) eine Chiffrier- oder Dechiffrierroutine einer Information mit Hilfe eines vertraulichen Datums, das in ersten und zweiten Speicherzonen dieses Sicherheitsprozessors aufgezeichnet ist, ausführt, **dadurch gekennzeichnet, dass**:
- der Sicherheitsprozessor einen Fehler beim Lesen des vertraulichen Datums erkennt (82), wobei er ein Verfahren nach einem der vorhergehenden Ansprüche einsetzt,
- wenn kein Fehler beim Lesen des vertraulichen Datums erkannt wird, der Sicherheitsprozessor das Chiffrieren oder Dechiffrieren (76) der Information mit Hilfe des gelesenen vertraulichen Datums vornimmt, andernfalls
- als Antwort auf die Erkennung eines Lesefehlers der Sicherheitsprozessor automatisch eine Gegenmessung auslöst (86), die das Chiffrieren oder Dechiffrieren der Information mit Hilfe des gelesenen vertraulichen Datums begrenzt, im Gegensatz zu dem Fall, in dem kein Lesefehler dieses vertraulichen Datums erkannt wird.

7. Informationsaufzeichnungsträger (38), **dadurch gekennzeichnet, dass** er Befehle für den Einsatz eines Verfahrens nach einem der vorhergehenden Ansprüche umfasst, wenn diese Befehle von einem elektronischen Rechner ausgeführt werden.

8. Sicherheitsprozessor, umfassend:
- eine erste (44) und eine zweite (46) elektronische Speicherzone,
- einen elektronischen Rechner (32), der dazu programmiert ist, um:
a) ein erstes Exemplar des Datums in der ersten Zone aufzuzeichnen und ein zweites Exemplar des Datums in der zweiten Zone aufzuzeichnen,
als Antwort auf einen Antrag auf Lesen des Datums:
b) die Werte der ersten und zweiten Exemplare des Datums in der ersten bzw. zweiten Zone zu lesen,
c) die gelesenen Werte der ersten und zweiten Exemplare des Datums zu vergleichen, und
d) wenn die gelesenen Werte des ersten und zweiten Exemplars identisch sind, keinen Lesefehler dieses Datums zu erkennen, **dadurch gekennzeichnet, dass** der elektronische Rechner auch dazu programmiert ist, um:
e) wenn die gelesenen Werte der ersten und zweiten Exemplare unterschiedlich sind, die vorherigen Schritte b) und c) zu reiterieren, dann
f) wenn die gelesenen Werte in Schritt e) identisch sind, einen Lesefehler dieses Datums zu erkennen und andernfalls keinen Lesefehler anzuzeigen.

9. Prozessor nach Anspruch 8, bei dem der Sicherheitsprozessor der Sicherheitsprozessor einer Chipkarte (30) ist.

10. Prozessor nach einem der Ansprüche 8 bis 9, bei dem der elektronische Speicher (38), erster Speicher genannt, ein nicht flüchtiger Speicher ist, und der Sicherheitsprozessor einen zweiten flüchtigen Speicher (36) umfasst, in den systematisch die in dem ersten Speicher (38) gelesenen Daten kopiert werden, um vom elektronischen Rechner (32) bearbeitet zu werden.

## Claims

1. Method for detecting an error in the reading of a data item, this method including:
a) the storing (50) of a first copy of the data item in a first area of an electronic memory and the storing of a second copy of the data item in a second area of an electronic memory,
in response to a request to read the data item:
b) the reading (68) of the values of the first and second copies of the data item in the first and second areas respectively,
c) the comparison (74) of the read values of the first and second copies of the data item,
d) if the read values of the first and second copies are identical, then no error in the reading of this data item is detected,
**characterized in that**:
e) if the read values of the first and second copies are different, then the preceding steps b) and c) are repeated (78, 80), then
f) if the values read in the step e) are identical, then an error in the reading of this data item is detected (82) and, otherwise, no error in the reading of this data item is detected.

2. Method according to Claim 1, wherein the method includes:
- the association (54) to the value of the first copy of the data item of an error detecting code adding redundancy to the data item and making it possible to detect an error in the value of this data item,
- if in the step f), the read values of the first and second copies are different, then the method includes the verification (86) of whether the read value of the first copy is erroneous or on the contrary correct using the error detecting code associated with this value, and
- if the read value of the first copy is correct, the storing (88) of the value of the first copy in a memory block of the second memory area different from the memory block where the preceding second copy of this data item was found, so as to form a new second copy of the data item, then
- the use of the new second copy instead and in place of the preceding second copy of the data item in a whole new iteration of the steps b) and c).

3. Method according to either of the preceding claims, wherein the method includes:
- the association (54) to the first and second copies of the data item of an error-correcting code adding enough redundancy to the values of the first and second copies to make it possible to correct one or more erroneous bits in the value of each of these copies of the data item,
- if in the step f), the read values of the first and second copies are different, then the method includes:
• the correction (98) using the error-correcting code of the values of the first and second copies of the data item to obtain corrected values for these first and second copies, then
• the comparison (100) of the corrected values of the first and second copies, and
• if the corrected values are identical, the storing (102) of the corrected value of the first copy of the data item in new memory blocks, from, respectively, first and second memory areas different from the memory blocks where the preceding first and second copies of this data item were found, so as to form new first and second copies of the data item, then
• the use of the new first and second copies instead and in place of the preceding first and second copies in a whole new iteration of the steps b) and c).

4. Method according to Claim 2 or 3, wherein for each memory block where a preceding copy of the data item was found, the method includes:
- the storing (90, 104, 116) of this memory block as being faulty, and
- upon the allocation of a new memory block in one of the memory areas in which to store an information item, the choosing (52) of this memory block, only from among the memory blocks of this area not stored as being faulty.

5. Method according to any one of the preceding claims, wherein,
- upon the storing of the first copy of the data item, the value of the data item is first transformed (56) using a reversible masking function to obtain a transformed value different from the non-transformed value and different from the stored value of the second copy, then it is this transformed value that is stored in the first area, and,
- upon the reading of the first copy, the inverse transformation is applied (72) to the stored transformed value to obtain the read value of the first copy.

6. Method for protecting a security processor from a reading attack, this security processor executing (76) a routine of enciphering or deciphering an information item using a confidential data item stored in first and second memory areas of this security processor, **characterized in that**:
- the security processor detects (82) an error in the reading of the confidential data item by implementing a method in accordance with any one of the preceding claims,
- if no error in the reading of the confidential data item is detected, the security processor continues with the enciphering or deciphering (76) of the information item using the read confidential data item, otherwise
- in response to the detection of a reading error, the security processor automatically triggers (86) a countermeasure limiting the enciphering or deciphering of the information item using the read confidential data item, with respect to the case where no error in the reading of this confidential data item is detected.

7. Information storage medium (38), **characterized in that** it includes instructions for the implementation of a method in accordance with any one of the preceding claims, when these instructions are executed by an electronic computer.

8. Security processor including:
- a first (44) and a second (46) area of an electronic memory,
- an electronic computer (32) programmed to:
a) store a first copy of the data item in the first area and store a second copy of the data item in the second area,
in response to a request to read the data item:
b) read the values of the first and second copies of the data item in the first and second areas respectively,
c) compare the read values of the first and second copies of the data item, and
d) if the read values of the first and second copies are identical, then detect no error in the reading of this data item,
**characterized in that** the electronic computer is also programmed to:
e) if the read values of the first and second copies are different, repeat the preceding steps b) and c), then
f) if the values read in the step e) are identical, then detect an error in the reading of this data item and, otherwise, indicate no reading error.

9. Security processor according to Claim 8, wherein the security processor is the security processor of a smartcard (30).

10. Processor according to either of Claims 8 and 9, wherein the electronic memory (38), known as the first memory, is a non-volatile memory and the security processor includes a second volatile memory (36) wherein the data read in the first memory (38) are systematically copied in order to be processed by the electronic computer (32).
